# EUROPÄISCHE PATENTSCHRIFT

(11) **EP 0 721 551 B1**
(45) Veröffentlichungstag und Bekanntmachung des Hinweises auf die Patenterteilung: **10.09.1997**
(21) Anmeldenummer: 93920669.4
(22) Anmeldetag: 29.09.1993
(51) Int. Cl.: F16L 58/10

(54) **VERFAHREN ZUR SANIERUNG VON ROHRLEITUNGEN**
PIPING SANITISING PROCESS
PROCEDE D'ASSAINISSEMENT DE CANALISATIONS

(43) Veröffentlichungstag der Anmeldung: 17.07.1996
(73) Patentinhaber: Reimelt, Andreas, 68723 Schwetzingen (DE)
(72) Erfinder: Reimelt, Andreas, 68723 Schwetzingen (DE)
(74) Vertreter: Naumann, Ulrich, Dr.-Ing.
(86) Internationale Anmeldenummer: DE9300919
(87) Internationale Veröffentlichungsnummer: WO9509320

(56) Entgegenhaltungen:
- EP-A- 0 299 134
- WO-A-92/01191
- FR-A- 2 526 124
- GB-A- 1 042 026
- US-A- 3 494 813

## Beschreibung

Die Erfindung betrifft ein Verfahren zur Sanierung von Rohrleitungen, wobei die an mindestens zwei Enden offene Rohrleitung mit vorgewärmter Trocknungsluft getrocknet, Innenbeläge durch strömende Abrasivmittel in Form von von strömender Luft getragenen Partikeln entfernt, die Rohrleitung ggf. mittels vorgewärmter Luft aufgeheizt und schließlich mit einem viskosen, aushärtenden Beschichtungsmaterial durch hindurchsaugen des Beschichtungsmaterials innenbeschichtet werden.

Grundsätzlich sei an dieser Stelle angemerkt, daß es sich bei den zu sanierenden Rohrleitungen um bereits installierte Leitungen handelt, die Gas, Dampf oder Flüssigkeit führen können. So kann es sich bspw. um Zu- und/oder Ablaufleitungen für Wasser oder Gas in Wohn-, Industrie- und Kommunalanlagen handeln, wobei darunter auch Haushalts- und Industrieabwasserleitungen fallen. Sämtliche dieser Leitungen neigen zu Verkrustungen, die vor allem auf Kalkablagerungen aus dem Wasser, auf Rostbildung an der Innenwandung der Leitung, auf Ausscheidungen aus dem Strömungsmedium, auf Reaktionsprodukte zwischen dem Strömungsmedium und mitgeführten Substanzen sowie dem Leitungsmaterial, etc. sowie auf daraus kombinierte Effekte zurückzuführen sind. Die zuvor genannten Erscheinungen führen zu Leckagen oder ganz erheblichen Verringerungen der Rohrinnenquerschnitte, wodurch der Transport des Strömungsmediums gestört, wenn nicht sogar unmöglich gemacht wird.

Das hier beanspruchte Verfahren zur Sanierung von Rohrleitungen hilft eine komplette Erneuerung der Rohrleitung zu vermeiden, was sich insbesondere hinsichtlich komplett installierter Sanitäreinrichtungen als ganz besonders vorteilhaft erweist. Hier sind nämlich die Rohrleitungen nach Entfernen der Armaturen mehr oder weniger frei zugänglich, so daß das beanspruchte Reinigungs- und Beschichtungsverfahren angewendet werden kann. Wesentlich ist jedenfalls, daß eine Rohrleitung an mindestens zwei offenen Enden zugänglich ist, so daß die einzelnen Verfahrensschritte durchführbar sind. Das beanspruchte Verfahren schließt eine zumindest partielle herkömmliche Reparatur der Rohrleitungen nicht aus, so daß komplette Rohrleitungsnetze durchaus auch teilweise erneuert und teilweise nach dem beanspruchten Verfahren saniert werden können.

Verfahren der in Rede stehenden Art sind seit geraumer Zeit aus der Praxis bekannt. Lediglich beispielhaft wird hier auf die europäische Patentschrift 0 299 134 verwiesen. Aus dieser europäischen Patentschrift ist ein gattungsbildendes Verfahren bekannt, wobei das Trocknen der Rohrleitung, das Entfernen der Innenbeläge in der Rohrleitung, das Vorwärmen der Rohrleitung und schließlich das Innenbeschichten der Rohrleitung mittels Druckluft erfolgt. Mit anderen Worten wird nach dem bekannten Verfahren Druckluft als solche bzw. Druckluft als Trägermedium durch die Rohrleitung hindurch gedrückt. Der Einsatz von Druckluft ist jedoch in der Praxis insoweit problematisch, als Druckluft gerade im Bereich von Biegungen bzw. Bögen eine bereits angegriffene Rohrleitung leicht zerstört. Weist die Rohrleitung bereits Leckagen auf, so führt der Einsatz von Druckluft zu einem Druckluftaustritt an den beschädigten Stellen und somit auch zu einem Austritt des mit der Druckluft mitgerissenen Mediums. Des weiteren führt der Einsatz von Druckluft gerade bei erheblichen Innenbelägen zu Verstopfungen der Rohrleitung und somit zu einem ganz erheblichen Aufwand zur Beseitigung der Verstopfungen. Per Druckluft weggerissene flächige Teile neigen nämlich gerade in Bogenbereichen zu Anhäufungen, die schließlich zu einem kompletten Zusetzen der Rohrleitung führen. Pulsierende Druckluftbeaufschlagungen oder Druckluftbeaufschlagungen von der anderen Seite der Rohrleitung her sind dann zwingend erforderlich, was den apparativen und zeitlichen Aufwand und somit die Kosten ganz erheblich erhöht.

Das bekannte Verfahren weist des weiteren den ganz erheblichen Nachteil auf, daß sich Leckagen während der Anwendung des Verfahrens bzw. während der Druckluftbeaufschlagung nicht bzw. so gut wie nicht feststellen lassen. Folglich besteht hier die Gefahr, daß trotz enormer Leckagen die Innenbeschichtung durchgeführt wird, wobei ein Schließen der Leckagen nahezu ausgeschlossen ist. Insoweit wird eine große Leckage bzw. ein Loch in der Rohrleitung durch Beschichtung geradezu "veredelt" und kann nicht mehr wirksam geschlossen werden.

Schließlich bringt das bekannte Verfahren ein ganz erhebliches Umweltproblem mit sich, werden nämlich die per Druckluft mitgerissenen Partikel am freien Ende der Rohrleitung in die Umgebung geschleudert. Folglich sind hier zu der einlaßseitig vorgesehenen Drucklufterzeugung auch noch besondere Auffangmittel zur Aufnahme der mit der Druckluft mitgerissenen Partikel erforderlich. Jedenfalls kann die am freien Ende austretende Druckluft nicht unkontrolliert in die Umgebung freigegeben werden, wodurch sich der apparative Aufwand abermals ganz erheblich erhöht.

Aus der DE-C2-33 15 465 (FR-A-2 526 124) ist ein gattungsbildendes Verfahren bekannt, bei dem Rohrleitungen durch feine Tröpfchen aus geschmolzenem thermoplastischem Kunststoff innenbeschichtet werden, wobei die Kunststofftröpfchen gemeinsam mit erhitzter Luft als Trägermedium durch die Rohrleitung gesaugt werden.

Nach dem gattungsbildenden Verfahren - Hindurchsaugen von Kunststofftröpfchen durch eine Rohrleitung - ist es zur hinreichenden Innenbeschichtung der Rohrleitung zwingend erforderlich, eine wesentlich größere Menge an Kunststofftröpfchen durch die Rohrleitung hindurch zu saugen, als tatsächlich zur Innenbeschichtung erforderlich ist. Dies ist darauf zurückzuführen, daß die Kunststofftröpfchen nur dann beschichtend wirken, wenn sie tatsächlich auf die Innenwandung auftreffen. Mit anderen Worten wird hier eine Art Kunststoffnebel durch die Rohrleitung hindurch gesaugt und die an der Innenwandung der Rohrleitung nicht hängengebliebenen Kunststofftröpfchen werden am auslaßseitigen Ende der Rohrleitung abgefangen bzw. zur weiteren Verarbeitung rückgewonnen.

Nach dem aus der DE-C2-33 15 465 bekannten Verfahren kann die Rohrleitung - bei erheblicher Verschmutzung - vor der eigentlichen Beschichtung gereinigt werden. Dazu wird eine Art Sandstrahlen bzw. Schrotstrahlen gegen die Innenwandung der Rohrleitung durchgeführt, wobei die Schrotkörner durch Trägerluft bei hohem Druck eingespritzt werden, um nämlich das Schrotstrahlen zu bewerkstelligen.

Das aus der DE-C2-33 15 465 bekannte Verfahren ist jedoch in der Praxis problematisch. Zum einen ist es nach dem bekannten Verfahren erforderlich, sowohl einlaßseitig als auch auslaßseitig der Rohrleitung Kompressoren vorzusehen. Dieser enorme apparative Aufwand ist insbesondere bei kleineren Gebäuden bzw. geringwertigen Sanierungsobjekten nicht zu verantworten. Darüber hinaus erfordert die Zerstäubung des Beschichtungsmaterials einen weiteren apparativen Aufwand, der die Kosten des Gesamtverfahrens enorm erhöht.

Zum anderen weist das bekannte Verfahren Nachteile in materialmäßiger Hinsicht auf, da nämlich das vernebelte Beschichtungsmaterial regelrecht vergeudet wird bzw. zur Vermeidung erheblicher Mengen an Sondermüll eine Art systemimanentes Recycling erforderlich ist. Auslaßseitig muß nämlich eine ganz besondere Einrichtung zum Auffangen und Aufbereiten des Beschichtungsmaterials vorgesehen werden, wodurch sich der apparative Aufwand abermals ganz erheblich erhöht. Letztendlich verursacht das hier in Rede stehende bekannte Verfahren sowohl in apparativer als auch in materialmäßiger Hinsicht so erhebliche Kosten, daß es in der Praxis wohl kaum durchführbar ist.

Der vorliegenden Erfindung liegt daher die Aufgabe zugrunde, ein Verfahren zur Sanierung von Rohrleitungen anzugeben, wonach mit einfachen technischen Mitteln und ohne übermäßigen materialmäßigen Einsatz ein hinreichender Sanierungserfolg erreicht wird.

Das erfindungsgemäße Verfahren löst die voranstehende Aufgabe durch die Merkmale des Patentanspruches 1. Danach ist das gattungsbildende Verfahren zur Sanierung von Rohrleitungen derart ausgebildet, daß die vorgewärmte Trocknungsluft sowie die Partikel von einem Ende her in die Rohrleitung hinein bzw. durch die Rohrleitung hindurch gesaugt werden, daß also in der Rohrleitung ausschließlich Unterdruck herrscht, und daß das am freien Ende der Rohrleitung eingebrachte Beschichtungsmaterial mengenmäßig derart bemessen wird, daß die Innenwandung der Rohrleitung zwar insgesamt beschichtet wird, daß aber saugseitig keine wesentlichen Mengen an Beschichtungsmaterial aus der Rohrleitung austreten.

Erfindungsgemäß ist hier erkannt worden, daß es zur Sanierung von Rohrleitungen vollkommen ausreicht, wenn auf einer Seite der Rohrleitung eine Vorrichtung zur Beschleunigung des Trägermaterials - Luft - vorgesehen ist. So wird nämlich in erfindungsgemäßer Weise das Abrasivmittel ebenso wie das Beschichtungsmaterial durch die Rohrleitung hindurch gesaugt. Im konkreten wird das Abrasivmittel gemeinsam mit Trägerluft von einem Ende her in die Rohrleitung hinein bzw. durch die Rohrleitung hindurch gesaugt. In der Rohrleitung herrscht demnach ausschließlich Unterdruck, und nicht etwa einlaßseitig Überdruck und lediglich am auslaßseitigen Ende der Rohrleitung geringfügig Unterdruck. Für die abrasive Situation innerhalb der Rohrleitung ist hier jedenfalls wesentlich, daß innerhalb der Rohrleitung - an jeder Stelle der Rohrleitung - insgesamt Unterdruck herrscht.

Des weiteren ergibt sich im Lichte einer Kostensenkung ein ganz besonderer kombinativer Effekt mit der voranstehend genannten Maßnahme dadurch, daß Beschichtungsmaterial zumindest weitgehend nur insoweit zur Verfügung gestellt wird, als es zur Beschichtung innerhalb der Rohrleitung auch tatsächlich benötigt wird. Dazu wird das am freien Ende der Rohrleitung eingebrachte Beschichtungsmaterial mengenmäßig derart bemessen, daß die Innenwandung der Rohrleitung zwar insgesamt beschichtet wird, daß aber saugseitig keine wesentlichen Mengen an Beschichtungsmaterial aus der Rohrleitung austreten. Mit anderen Worten wird das Beschichtungsmaterial - bspw. pfropfenförmig - in die Rohrleitung Portion für Portion eingegeben, bis am auslaßseitigen Ende eine dortige Beschichtung festgestellt wird. Erfahrungswerte werden hier selbstverständlich hinzugezogen. Jedenfalls ist es hier nicht erforderlich, am auslaßseitigen Ende der Rohrleitung eine Auffangeinrichtung für überschüssiges Beschichtungsmaterial oder gar eine Einrichtung zum Recycling des möglicherweise bereits aushärtenden Beschichtungsmaterials vorzusehen.

Hinsichtlich einer besonders umweltschonenden Durchführung des erfindungsgemäßen Verfahrens ist es von Vorteil, wenn die zum Trocknen der Rohrleitung dienende vorgewärmte Luft nicht einfach abgesaugt, sondern vielmehr über eine Filtereinrichtung aus der Rohrleitung heraus bzw. durch die Rohrleitung hindurch gesaugt wird. Dem dazu dienenden Kompressor könnte die Filtereinrichtung direkt vorgeschaltet werden, so daß keine gesonderten Gerätschaften erforderlich sind.

Bei dem zum Entfernen der Innenbeläge dienenden Abrasivmittel handelt es sich um von strömender Luft getragene Partikel jedweder Art, die jedoch härter sein müßten als die zu entfernenden Innenbeläge. Dabei hat es sich insbesondere bei der Sanierung von Wasserleitungen bewährt, daß die Partikel eine Korngröße im Bereich von 0,3 mm und 6 mm aufweisen. Ein spezifisches Gewicht von mehr als 3,0 g/cm³ hat sich ebenfalls als vorteilhaft herausgestellt, wobei in diesem Falle Luft als Trägermedium dient. Im konkreten könnte es sich bei den abrasiv wirkenden Partikeln um Korund oder Quarzsand handeln. Ebenso könnten die abrasiv wirkenden Partikel als Metallteilchen, insbesondere als ferromagnetische Teilchen, ausgeführt sein. Aufgrund solcher Partikel wäre eine anschließende magnetische Trennung der abrasiv wirkenden Partikel von den losgelösten Innenbelägen möglich, die - wie bereits zuvor erwähnt - aus Rost und/oder Kalk bestehen.

Das Aufbringen des Beschichtungsmittels und somit einerseits eine gute Benetzung mit der Innenwandung der Rohrleitung und andererseits ein schnelles anschließendes Aushärten wird ganz besonders dadurch begünstigt, daß die Rohrleitung nach Entfernen der Innenbeläge auf eine über der Raumtemperatur liegende Temperatur aufgeheizt wird. Dabei hat sich eine Temperatur von etwa 40° C ganz besonders bewährt. Das Aufheizen der Rohrleitung könnte wiederum durch Hindurchsaugen aufgeheizter Luft erfolgen, die solange durch die Rohrleitung hindurch gesaugt wird, bis am auslaßseitigen Ende die gewünschte Temperatur erreicht ist. Diese könnte man wiederum über den Temperaturabfall zwischen dem einlaßseitigen Ende und dem auslaßseitigen Ende der Rohrleitung detektieren. Wesentlich ist jedenfalls, daß das Aufheizen der Rohrleitung durch Hindurchsaugen aufgeheizter Luft und nicht etwa durch Hindurchdrücken von Preßluft erfolgt. Schließlich könnte die zum Aufheizen der Rohrleitung dienende vorgewärmte Luft ebenfalls über eine Filtereinrichtung abgesaugt werden, wobei auch diese Filtereinrichtung dem zum Ansaugen dienenden Kompressor direkt vorgeschaltet sein kann.

Des weiteren könnte in ganz besonders vorteilhafter Weise das Aufheizen der Rohrleitung ausschließlich oder zusätzlich durch eine nach dem Reinigen und vor dem Innenbeschichten in die Rohrleitung gesaugte Heizeinrichtung erfolgen. Insoweit wäre das Ansaugen von aufgeheizter Luft nicht zwingend erforderlich, wenn die Kapazität der in die Rohrleitung eingesaugten Heizeinrichtung ausreicht. Jedenfalls könnte die Heizeinrichtung gerade bei extrem langen Rohrleitungen ein Abkühlen der endseitig angesaugten Luft vermeiden, so daß der Aufwärmvorgang ganz erheblich beschleunigt wird. Die dazu verwendete Heizeinrichtung könnte in weiter vorteilhafter Weise als Heizdraht, insbesondere als selbstregelnder Heizdraht, ausgeführt sein. Ein solcher Heizdraht könnte bspw. im Sinne einer Widerstandsheizung mit keramischer Isolation des Heizleiters ausgeführt sein. Grundsätzlich sind hier jedoch sämtliche in eine Rohrleitung einführbare bzw. ansaugbare Einrichtungen anwendbar.

Hinsichtlich einer wirkungsvollen Beheizung der Rohrleitung ist es von weiterem Vorteil, wenn sich der Heizdraht im wesentlichen über die gesamte Länge der Rohrleitung durch diese hindurch erstreckt. Ein gleichmäßiges Aufheizen der Rohrleitung ist somit gewährleistet.

Hinsichtlich des Einbringens des Heizdrahtes ist es von ganz besonderem Vorteil, wenn dieser mittels eines Schleppsystems in die Rohrleitung eingesaugt wird. Als Schleppsystem könnte eine Art Fallschirm oder dgl. dienen, der von der aufgrund des Unterdrucks entstehenden Luftströmung durch die Rohrleitung hindurch erfaßt wird und den Heizdraht mit sich zieht.

Nach hinreichender Aufheizung der Rohrleitung wird der Heizdraht in vorteilhafter Weise - vor der Innenbeschichtung - aus der Rohrleitung wieder heraus gezogen. Dabei könnte der Heizdraht sowohl vom einlaßseitigen Ende her als auch vom auslaßseitigen, d.h. unterdruckseitigen Ende her herausgezogen werden, wobei im letztgenannten Falle die Stromanschlüsse einlaßseitig gelöst werden müßten.

In die aufgeheizte Rohrleitung wird dann das Beschichtungsmaterial eingegeben, wobei auch hier auslaßseitig ein Unterdruck erzeugt wird. Aufgrund dieses Unterdruckes wird das Beschichtungsmaterial gemeinsam mit der Umgebungsluft in die Rohrleitung eingesaugt, wobei aufgrund der unterschiedlichen Viskosität zwischen Luft und dem Beschichtungsmaterial das viskose Beschichtungsmaterial an die Rohrwandung gedrückt wird und dort diese benetzt. Im Falle der Verwendung von Harz bzw. Kunstharz oder Kunststoff als Beschichtungsmaterial ergibt sich eine nahtlose Beschichtung der Innenwandung der Rohrleitung, wobei die zum Einziehen des Beschichtungsmaterials erforderliche Druckdifferenz ausschließlich durch das auslaßseitige Vakuum erzeugt wird.

Im Falle erheblicher Leckagen kann das Beschichtungsmaterial eingelagerte Fasern, insbesondere Kurzfasern, aufweisen, wobei es sich hier in ganz besonders vorteilhafter Weise um Glasfasern handeln kann. Diese Glasfasern würden sich aufgrund der irregulär ausgestalteten Austrittsöffnungen dort querstellen bzw. verhaken und dem viskosen Beschichtungsmaterial einen hinreichenden Halt zum Verstopfen der Leckage vermitteln. Insoweit ließen sich zumindest kleine Löcher verschließen und Leckagen beheben.

Des weiteren könnte nach dem erfindungsgemäßen Verfahren beim endseitigen Saugen das freie Ende der Rohrleitung zumindest zeitweise verschlossen werden, wobei über den sich allmählich einstellenden Unterdruck etwaige Leckagen detektierbar sind. Wird kaum ein Unterdruck erreicht, weist das zu sanierende Leitungssystem eine ganz erhebliche Leckage auf.

Will man die bspw. bereits gereinigte Rohrleitung vor der eigentlichen Beschichtung hinsichtlich ihres Zustandes untersuchen oder will man nach der Beschichtung die Qualität der Beschichtungsmaßnahme überprüfen, könnte hierzu ein optisches Mittel zur Inspektion der Rohrleitung bzw. zur Qualitätskontrolle der Innenbeschichtung in die Rohrleitung ebenfalls eingesaugt werden. Auch hier könnte ein Schleppsystem als Hilfsmittel zum Einsatz kommen. Bei dem optischen Mittel könnte es sich im einfachsten Falle um eine Glasfaserleitung handeln, die einerseits Licht in die Rohrleitung verbringen und andererseits dort reflektierte Lichtstrahlen aus der Rohrleitung heraus führen kann. Glasfaserbündel bzw. unterschiedliche Glasfaserleitungen mit unterschiedlichen Aufgaben könnten vorgesehen sein. Bei ganz besonders anspruchsvoller Ausgestaltung könnte das optische Mittel eine Art Endoskopieeinrichtung umfassen, d.h. eine in die Rohrleitung einsaugbare Miniatur-Kamera mit entsprechender Beleuchtung und sogar mit miniaturisiertem, fernbedienbarem Handwerkszeug zur Probennahme oder dgl..

## Patentansprüche

1. Verfahren zur Sanierung von Rohrleitungen, wobei die an mindestens zwei Enden offene Rohrleitung mit vorgewärmter Trocknungsluft getrocknet, Innenbeläge durch strömende Abrasivmittel in Form von von strömender Luft getragenen Partikeln entfernt, die Rohrleitung ggf. mittels vorgewärmter Luft aufgeheizt und schließlich mit einem viskosen, aushärtenden Beschichtungsmaterial durch hindurchsaugen des Beschichtungsmaterials innenbeschichtet werden,
**dadurch gekennzeichnet**, daß die vorgewärmte Trocknungsluft sowie die Partikel von einem Ende her in die Rohrleitung hinein bzw. durch die Rohrleitung hindurch gesaugt werden, daß also in der Rohrleitung ausschließlich Unterdruck herrscht, und daß das am freien Ende der Rohrleitung eingebrachte Beschichtungsmaterial mengenmäßig derart bemessen wird, daß die Innenwandung der Rohrleitung zwar insgesamt beschichtet wird, daß aber saugseitig keine wesentlichen Mengen an Beschichtungsmaterial aus der Rohrleitung austreten.

2. Verfahren nach Anspruch 1, dadurch gekennzeichnet, daß die zum Trocknen der Rohrleitung dienende vorgewärmte Trocknungsluft über eine Filtereinrichtung abgesaugt wird.

3. Verfahren nach Anspruch 1 oder 2, dadurch gekennzeichnet, daß die Partikel eine Korngröße im Bereich zwischen 0,3 mm und 6 mm aufweisen.

4. Verfahren nach einem der Ansprüche 1 bis 3, dadurch gekennzeichnet, daß die Partikel ein spezifisches Gewicht größer als 3,0 g/cm³ aufweisen.

5. Verfahren nach einem der Ansprüche 1 bis 4, dadurch gekennzeichnet, daß als Partikel Korund oder Quarzsand verwendet wird.

6. Verfahren nach einem der Ansprüche 1 bis 4, dadurch gekennzeichnet, daß als Partikel Metallteilchen, insbesondere ferromagnetische Teilchen, verwendet werden.

7. Verfahren nach einem der Ansprüche 1 bis 6, dadurch gekennzeichnet, daß die Rohrleitung nach Entfernen der Innenbeläge auf etwa 40° C aufgeheizt wird.

8. Verfahren nach einem der Ansprüche 1 bis 7, dadurch gekennzeichnet, daß das Aufheizen der Rohrleitung durch Hindurchsaugen aufgeheizter Luft erfolgt.

9. Verfahren nach Anspruch 8, dadurch gekennzeichnet, daß die zum Aufheizen der Rohrleitung dienende vorgewärmte Luft über eine Filtereinrichtung abgesaugt wird.

10. Verfahren nach einem der Ansprüche 1 bis 7, ggf. nach Anspruch 8 oder 9, dadurch gekennzeichnet, daß das Aufheizen der Rohrleitung ausschließlich oder zusätzlich durch eine nach dem Reinigen und vor dem Innenbeschichten in die Rohrleitung gesaugte Heizeinrichtung erfolgt.

11. Verfahren nach Anspruch 10, dadurch gekennzeichnet, daß die Heizeinrichtung als Heizdraht ausgeführt ist.

12. Verfahren nach Anspruch 11, dadurch gekennzeichnet, daß der Heizdraht selbstregelnd ausgeführt ist.

13. Verfahren nach Anspruch 11 oder 12, dadurch gekennzeichnet, daß sich der Heizdraht im wesentlichen über die gesamte Länge der Rohrleitung durch diese hindurch erstreckt.

14. Verfahren nach einem der Ansprüche 11 bis 13, dadurch gekennzeichnet, daß der Heizdraht mittels eines Schleppsystems in die Rohrleitung eingesaugt wird.

15. Verfahren nach einem der Ansprüche 11 bis 14, dadurch gekennzeichnet, daß der Heizdraht vor der Innenbeschichtung aus der Rohrleitung wieder herausgezogen wird.

16. Verfahren nach einem der Ansprüche 1 bis 15, dadurch gekennzeichnet, daß das Beschichtungsmaterial gemeinsam mit Luft in die Rohrleitung eingesaugt wird.

17. Verfahren nach Anspruch 16, dadurch gekennzeichnet, daß als Beschichtungsmaterial Harz, vorzugsweise Kunstharz bzw. Kunststoff, verwendet wird.

18. Verfahren nach Anspruch 17, dadurch gekennzeichnet, daß das Beschichtungsmaterial eingelagerte Fasern, vorzugsweise Glasfasern, aufweist.

19. Verfahren nach einem der Ansprüche 1 bis 18, dadurch gekennzeichnet, daß beim endseitigen Saugen das freie Ende der Rohrleitung zumindest zeitweise verschlossen wird und daß über den sich einstellenden Unterdruck etwaige Leckagen detektiert werden.

20. Verfahren nach einem der Ansprüche 1 bis 19, dadurch gekennzeichnet, daß ein optisches Mittel zur Inspektion der Rohrleitung bzw. zur Qualitätskontrolle der Innenbeschichtung in die Rohrleitung einsaugbar ist.

21. Verfahren nach Anspruch 20, dadurch gekennzeichnet, daß das optische Mittel eine Glasfaserleitung umfaßt.

22. Verfahren nach Anspruch 21, dadurch gekennzeichnet, daß das optische Mittel zumindest im weitesten Sinne als Endoskopieeinrichtung ausgeführt ist.

## Claims

1. Method of renovating pipes, where the pipe which is at least at two ends open is dried with preheated air, deposits at the inner wall are removed by abrasive agents in form of particles carried by an air flow, the pipe is heated up with preheated air, if necessary, and finally, the inner wall is coated with a viscous hardening coating material,
**characterized in that** the preheated air and the particles are introduced into and/or passed through the pipe by means of suction such that the pipe is exclusively exposed to low pressure and that the amount of coating material introduced into the pipe at its free end is dosed such the inner wall of the pipe is coated while there are no substantial amounts of coating material emerging at the suction side of the pipe.

2. Method according to claim 1, characterized in that the preheated air used to dry the pipe is drawn off via a filtering device.

3. Method according to claim 1 or 2, characterized in that the particles have size ranging between 0,3 mm and 6 mm.

4. Method according to one of claims 1 to 3, characterized in that the particles have a specific weight of more than 3,0 g/cm³.

5. Method according to one of the claims 1 to 4, characterized in that corrundum or silica sand are used as particles.

6. Method according to one of the claims 1 to 4, characterized in that the particles used are metal particles, especially ferromagnetics particles.

7. Method according to one of the claims 1 to 6, characterized in that subsequent to removing the internal deposits, the pipe is heated up to approximately 40°C.

8. Method according to one of the claims 1 to 7, characterized in that the pipe is heated up by drawing in hot air.

9. Method according to claim 8, characterized in that the preheated air used to heat up the pipe is drawn off via a filtering device.

10. Method according to one of the claims 1 to 7, optionally according to claims 8 or 9, characterized in that the heating of the pipes is accomplished either exclusively or in addition with a heating device which is drawn into the pipe after the cleaning and prior to the coating of the inner wall of the pipe.

11. Method according to claim 10, characterized in that the heating device is configured as a heating wire.

12. Method according to claim 11, characterized in that the heating wire is selfregulating.

13. Method according to claim 11 or 12, characterized in that the heating wire extends essentially along the entire length of the pipe and therethrough.

14. Method according to one of the claims 11 to 13, characterized in that the heating wire is drawn into the pipe with the acid of a towing system.

15. Method according to one of the claims 11 to 14, characterized in that the heating wire is pulled out of the pipe prior to coating the inner wall thereof.

16. Method according to one of the claims 1 to 15, characterized in that the coating material is drawn into the pipe together with air.

17. Method according to claim 16, characterized in that resin, preferably synthetic resin or plastic is used as a coating material.

18. Method according to claim 17, characterized in that the coating material contains fibers, preferably glass fibers.

19. Method according to one of the claims 1 to 18, characterized in that while suction is generated at the one end of the pipe, the other free end of the pipe is closed for at least a certain period of time and that the resulting low pressure condition is used to detect possible leckages.

20. Method according to one of the claims 1 to 18, characterized in that an optical means to inspect the pipe and assure the quality of the coat at the inner wall of the pipe can be drawn into the pipe.

21. Method according to claim 20, characterized in that the optical means includes a glass fiber cable.

22. Method according to claim 21, characterized in that in the broadest sense, the optical means is configured as an endoscopic device.

## Revendications

1. Procédé d'assainissement de canalisations, où la canalisation ouverte en au moins deux extrémités est séchée avec de l'air de séchage préchauffé, où des dépôts intérieurs sont éliminés par des produits abrasifs en circulation sous forme de particules entraînées par un flux d'air, où la canalisation est réchauffée le cas échéant au moyen d'air préchauffé et où enfin la canalisation est dotée d'un revêtement intérieur, constitué par un matériau de revêtement visqueux durcissant, par l'aspiration de ce matériau,
caractérisé en ce que l'air de séchage préchauffé ainsi que les particules sont aspirés depuis une extrémité de la canalisation ou propulsés par aspiration au travers cette canalisation, en ce que dès lors il est établi dans l'ensemble de la canalisation uniquement une dépression, et en ce que la quantité de matériau de revêtement admise à l'extrémité libre de la canalisation est calculée de manière telle que la paroi intérieure de la canalisation est, certes, totalement revêtue, mais que du côté aspiration il ne s'échappe pas de la canalisation des quantités sensibles de matériau de revêtement.

2. Procédé suivant la revendication 1, caractérisé en ce que l'air de séchage préchauffé servant au séchage de la canalisation est aspiré au travers une installation de filtrage.

3. Procédé suivant la revendication 1 ou 2, caractérisé en ce que les particules présentent une granulométrie dans la fourchette de 0,3 mm et 6 mm.

4. Procédé suivant l'une quelconque des revendications 1 à 3, caractérisé en ce que les particules présentent un poids spécifique supérieur à 3,0 g/cm³.

5. Procédé suivant l'une quelconque des revendications 1 à 4, caractérisé en ce que les particules mises en oeuvre sont du corindon ou du sable de quartz.

6. Procédé suivant l'une quelconque des revendications 1 à 4, caractérisé en ce que les particules mises en oeuvre sont des particules métalliques, notamment des particules ferromagnétiques.

7. Procédé suivant l'une quelconque des revendications de 1 à 6, caractérisé en ce qu'après l'élimination des dépôts intérieurs, la canalisation est réchauffée à la température d'environ 40° C.

8. Procédé suivant l'une quelconque des revendications de 1 à 7, caractérisé en ce que le réchauffement de la canalisation est réalisé par aspiration d'air réchauffé.

9. Procédé suivant la revendication 8, caractérisé en ce que l'air préchauffé servant au réchauffement de la canalisation est aspiré au travers une installation de filtrage.

10. Procédé suivant l'une quelconque des revendications de 1 à 7, et le cas échéant 8 ou 9, caractérisé en ce que le réchauffement de la canalisation a lieu exclusivement ou en complément par un moyen de chauffage aspiré au travers la canalisation après le nettoyage et avant l'opération de revêtement intérieur.

11. Procédé suivant la revendication 10, caractérisé en ce que le moyen de chauffage est un fil de chauffage.

12. Procédé suivant la revendication 11, caractérisé en ce que le fil de chauffage est à auto-régulation.

13. Procédé suivant la revendication 11 ou 12, caractérisé en ce que le fil de chauffage s'étend en substance sur toute la longueur de la canalisation au travers celle-ci.

14. Procédé suivant l'une quelconque des revendications de 11 à 13, caractérisé en ce que le fil de chauffage est aspiré au moyen d'un système de remorquage dans la canalisation.

15. Procédé suivant l'une quelconque des revendications de 11 à 14, caractérisé en ce que le fil de chauffage est retiré de la canalisation avant l'opération de revêtement intérieur.

16. Procédé suivant l'une quelconque des revendications de 11 à 15, caractérisé en ce que le matériau de revêtement est aspiré dans la canalisation conjointement avec de l'air.

17. Procédé suivant la revendication 16, caractérisé en ce que en tant que matériau de revêtement il est utilisé de la résine, de préférence de la résine synthétique ou de la matière plastique.

18. Procédé suivant la revendication 17, caractérisé en ce que le matériau de revêtement présente des fibres, de préférence des fibres de verre.

19. Procédé suivant l'une quelconque des revendications de 11 à 18, caractérisé en ce que dans le cas d'une aspiration par une extrémité, l'extrémité libre de la canalisation est au moins momentanément bouchée et en ce la dépression ainsi engendrée permet de détecter des fuites éventuelles.

20. Procédé suivant l'une quelconque des revendications de 11 à 19, caractérisé en ce qu'un moyen optique pour l'inspection de la canalisation ou pour le contrôle de qualité du revêtement intérieur peut être introduit par aspiration dans la canalisation.

21. Procédé suivant la revendication 20, caractérisé que le moyen optique comprend une ligne en fibres de verre.

22. Procédé suivant la revendication 21, caractérisé en ce que le moyen optique a la forme dans le sens large d'une installation d'endoscopie.
